# DEMANDE DE BREVET EUROPEEN

(11) **EP 4 699 427 A1**
(43) Date de publication de la demande: **25.02.2026**
(21) Numéro de dépôt: 24196259.6
(22) Date de dépôt: 23.08.2024
(51) Int. Cl.: A01C 5/06, A01C 7/08, A01C 7/20, A01C 15/04

(54) **DISPOSITIF D'INTRODUCTION D'UNE COMPOSITION FERTILISANTE HYDRO-RÉTENTRICE DANS LE SOL, UN ENSEMBLE D'INTRODUCTION CONJOINTE ET PROCÉDÉ DE MISE EN UVRE D'UN TEL DISPOSITIF**

(71) Demandeur: Raincatcher Technologies Trading DMCC, Dubai (AE)
(72) Inventeur: Le Coz, Yann, RAS AL KHAIMAH (AE); Bouxom, Franck, RAS AL KHAIMAH (AE)
(74) Mandataire: Tranvouez, Edern Morgan

(57) **Abrégé**

L'invention concerne un dispositif d'introduction (10) d'une composition (21) fertilisante hydro-rétentrice dans le sol (5) comprenant : une structure porteuse (110) ; un réservoir (120) ; un système d'alimentation (130) en composition adapté pour générer un flux continu de composition ; au moins une dent (140A, 140B) adaptée pour être au moins en partie enfoncée dans le sol (5), ladite dent (140A, 140B) comprenant un orifice d'amené (141) de la composition dans le sol (5), le ou chaque orifice d'amené (141) étant relié au système d'alimentation (130) ; un mécanisme d'enfoncement (151A, 151B, 153A, 153B) de l'au moins une dent (140A, 140B) reliant la dent à la structure porteuse (110) et conformé pour maintenir enfoncé dans le sol (5) au moins en partie l'au moins une dent (140A, 140B) avec une profondeur d'enfoncement de l'orifice d'amené (141).

## Description

### Domaine technique

L'invention concerne le domaine de la fertilisation et de l'hydratation des champs agricoles.

L'invention a ainsi pour objet un dispositif d'introduction d'une composition Fertilisante Hydro-rétentrice dans le sol, un ensemble d'introduction conjointe d'une composition fertilisante hydro-rétentrice et de semences et un procédé d'introduction d'une composition fertilisant hydro-rétentrice.

### État de l'art antérieur

Lors des semis, il n'est pas rare de rajouter des fertilisants en parallèle ou après les semis ceci afin de favoriser la croissance des plantes.

Si une telle adjonction de fertilisant permet de favoriser la croissance des plantes, l'obtention d'une telle croissance nécessite également de prévoir un arrosage régulier de ces dernières, soit par l'intermédiaire d'un apport d'eau naturel, c'est-à-dire la pluie, soit par un arrosage régulier. Néanmoins, avec le contexte de réchauffement climatique actuel, cet apport d'eau régulier est rendu complexe et il y aurait donc une nécessité à limiter les besoins en eau des plantes ceci sans que cela n'affecte leur croissance.

Afin de permettre une telle limitation du besoin en eau des plantes tout en offrant une fertilisation adaptée pour leur croissance, il pourrait être envisageable d'utiliser, en remplacement au moins partiel des fertilisants, une composition fertilisante hydro-rétentrice. Une telle utilisation, afin d'offrir une réelle réduction des besoins en eau et d'être parfaitement efficace, devrait se faire à une profondeur prédéfinie lors des semis.

Néanmoins, sauf à réaliser une introduction manuellement, il n'existe pas actuellement de dispositif adapté pour une telle introduction d'une telle composition à une profondeur préfinie en parallèle des semis.

### Exposé de l'invention

L'invention vise à remédier à cet inconvénient et vise à fournir un dispositif qui soit apte à permettre une introduction d'une composition fertilisante hydro-rétentrice dans le sol en parallèle des semis.

A cet effet l'invention concerne un dispositif d'introduction d'une composition Fertilisante Hydro-rétentrice dans le sol, ladite composition étant sous une forme granulaire ou gélifiée, comprenant :
- une structure porteuse,
- un réservoir destiné à contenir la composition et agencé sur la structure porteuse,
- un système d'alimentation en composition, adapté pour générer un flux continu de composition,
- au moins une dent montée sur la structure porteuse et adaptée pour être au moins en partie enfoncée dans le sol, ladite dent comprenant un orifice d'amené de la composition dans le sol aménagé à proximité d'une extrémité distale de la dent, le ou chaque orifice d'amené étant relié au système d'alimentation afin d'être alimenté en composition par le flux continu de composition,
- un mécanisme d'enfoncement de l'au moins une dent conformé pour maintenir enfoncé dans le sol au moins en partie l'au moins une dent avec une profondeur d'enfoncement de l'orifice d'amené correspondant à une première profondeur donnée.

Un tel dispositif permet, lorsqu'il est tracté (ou poussé) par un véhicule notamment agricole permet l'introduction d'une composition fertilisante hydro-rétentrice à la première profondeur ceci le long d'une ligne de fertilisation. Avec un tel contrôle de la profondeur et le positionnement de cette ligne de fertilisation vis-à-vis d'une ligne de semi, il est possible d'apporter les nutriments et d'optimiser les besoins en eau des plantes. De plus un tel dispositif autorise que cette introduction puisse se faire en parallèle avec les semis autorisant de fait une introduction conjointe dans le sol des semences agricoles et de la composition.

Un autre avantage du présent dispositif est qu'il autorise de plus que cette introduction peut être réalisée à une profondeur distincte de celle des semences. De ce fait, la première profondeur peut être précisément adapté pour permettre aux semences de pleinement bénéficier de la composition Fertilisante Hydro-rétentrice.

La ou chaque dent comprend l'extrémité distale et une extrémité proximale à la structure porteuse, la ou chaque dent étant préférentiellement montée sur la structure porteuse au niveau de l'extrémité proximale.

Le système d'alimentation peut comprendre une source de gaz pressurisé apte à gérer un flux de gaz pressurisé et dans lequel le système d'alimentation est configuré pour délivrer le flux de gaz pressurisé à une conduite d'amené de composition de manière à fournir un entraînement de ladite composition sous la forme du flux continu de composition.

Un tel flux de gaz permet une délivrance de la composition selon un flux continu permettant une introduction de la composition tout au long du déplacement du dispositif d'introduction assurant une fertilisation optimale et optimisant la rétention d'eau à proximité de plante.

le système d'alimentation peut comprendre au moins une roue ou un rouleau de prélèvement agencé pour prélever une quantité de composition dans le réservoir relative à une vitesse de rotation de ladite roue ou rouleau de prélèvement et délivrer ladite quantité de composition dans la conduite d'amené, le dispositif d'introduction comprenant en outre un moteur apte à entraîner en rotation la roue ou le rouleau de prélèvement à une vitesse variable de manière à faire varier le débit en composition du flux continu de composition.

Un tel système de roue ou rouleau de prélèvement permet d'assurer la précision de la quantité de composition délivrée dans le sol.

L'au moins une dent peut être montée déplaçable en translation le long de la structure porteuse de manière à permettre un réglage en position de ladite dent et donc d'une ligne de fertilisation correspondante le long de ladite structure porteuse.

Un tel déplacement en translation permet de régler précisément la disposition sur le plan horizontal du sillon de composition vis-à-vis de celui de l'ensemencement. Ainsi, il est possible de régler précisément la distance, sur le plan horizontal, à laquelle est introduit la composition vis-à-vis des plantes qui seront issues des semences.

Le dispositif d'introduction peut comprendre en outre un système de détermination d'une vitesse de déplacement du dispositif d'introduction ou d'un véhicule porteur le portant, et le système d'alimentation étant configuré pour modifier le flux continu de composition en fonction de la vitesse de déplacement du dispositif d'introduction ou du véhicule porteur, ledit système d'alimentation étant préférentiellement configuré pour stopper le flux continu de composition lorsque le vitesse de déplacement du dispositif d'introduction ou d'un véhicule porteur passe sous une vitesse seuil.

Le système de détermination d'une vitesse de déplacement peut être configuré pour communiquer avec un système de positionnement du véhicule porteur afin d'obtenir une information relative au positionnement ou au déplacement dudit véhicule porteur.

De cette manière, le dispositif d'introduction bénéficie des équipements du véhicule porteur pour déterminer la vitesse de déplacement du véhicule porteur et donc de sa vitesse de déplacement.

L'invention concerne en outre un ensemble d'introduction conjointe d'une composition fertilisante hydro-rétentrice et de semences comprenant :
- un véhicule porteur,
- un dispositif d'ensemencement configuré pour introduire les semences dans le sol à intervalle régulier au niveau d'une ligne de semis ceci à une deuxième profondeur donnée,
- un dispositif d'introduction selon l'invention afin de permettre l'introduction de la composition dans le sol à la première profondeur donnée le long d'une ligne de fertilisation,
le véhicule porteur portant le dispositif d'ensemencement et le dispositif d'ensemencement de telle manière à permettre l'introduction des semences et de la composition dans le sol.

Un tel ensemble bénéficie des avantages du dispositif d'introduction selon l'invention qu'il comporte.

L'invention concerne en outre un procédé d'introduction d'une composition fertilisante hydro-rétentrice, ladite composition étant sous une forme granulaire ou gélifiée, le procédé d'introduction comprenant l'étape suivante :
- enfoncement et maintien enfoncé au moins en partie dans le sol d'au moins une dent, ladite dent comprenant un orifice d'amené de la composition dans le sol aménagé à proximité d'une extrémité distale de la dent, le maintien enfoncé étant réalisé de manière à ce qu'une profondeur d'enfoncement de l'orifice d'amené correspond à une première profondeur donnée,
- génération d'un flux continu de composition et alimentation du ou de chaque orifice d'amené par ledit flux continu de composition,
- déplacement de l'au moins une dent de manière à fournir l'introduction de la composition à la première profondeur donnée le long d'une ligne de fertilisation.

Un tel procédé permet l'introduction d'une composition fertilisante hydro-rétentrice à la première profondeur ceci le long d'une ligne de fertilisation. Avec un tel contrôle de la profondeur et le positionnement de cette ligne de fertilisation vis-à-vis d'une ligne de semi, il est possible d'apporter les nutriments et d'optimiser les besoins en eau des plantes. De plus un tel procédé permet que cette introduction soit réalisée en parallèle avec les semis autorisant de ce fait une introduction conjointe dans le sol des semences agricoles et de la composition.

La composition fertilisante hydro-rétentrice comprend :
- un hydrogel comprenant un copolymère de polyacrylate et d'acrylamides de potassium ; et
- au moins un engrais azoté pur.

Une telle composition permet une fertilisation optimale tout en offrant une capacité de rétention des eaux de pluie et des eaux d'arrosage au sol à proximité des semis.

Il peut être prévu en outre l'étape supplémentaire :
- Introduction à une deuxième profondeur donnée de semences à intervalle régulier et en parallèle du déplacement de l'au moins une dent de manière à fournir une ligne de semis parallèle à la ligne de fertilisation.

Une telle introduction conjointe permet en un seul passage une introduction de la composition à une profondeur distincte de celle des semences. De ce fait, la première profondeur peut être précisément adapté pour permettre aux semences de pleinement bénéficier de la composition Fertilisante Hydro-rétentrice. De plus, cette introduction étant conjointe, le positionnement de la ligne de fertilisation est parfaitement aligné vis-à-vis de celui de la ligne de semis.

### Brève description des dessins

La présente invention sera mieux comprise à la lecture de la description d'exemples de réalisation, donnés à titre purement indicatif et nullement limitatif, en faisant référence aux dessins annexés sur lesquels :
- les figures 1A à 1C illustrent respectivement un schéma de principe de l'introduction conjointe dans le sol de semence agricoles et d'une composition fertilisante hydro-rétentrice, une vue schématique en coupe d'une ligne de semis et d'une ligne de fertilisation obtenues lors de cette introduction conjointe et une vue de dessus schématique de l'introduction de la composition fertilisante hydro-rétentrice autorisant un réglage du positionnement des lignes de fertilisation,
- la figure 2 illustre une vue en perspective d'un exemple de dispositif d'introduction d'une composition fertilisante hydro-rétentrice dans le sol selon l'invention
- la figures 3A et 3B illustrent respectivement une vue en perspectif du dispositif de la figure 2 dans lequel le groupe réservoir et système d'alimentation ont été mis en transparent et sont agencés dans une conformation compact, et une vue en perspectif de ce même dispositif dans lequel le groupe réservoir et système d'alimentation et son support ont été enlevés,
- la figure 4 illustre le réservoir et le système d'alimentation du dispositif d'introduction illustré sur les figures 2 à 3B,

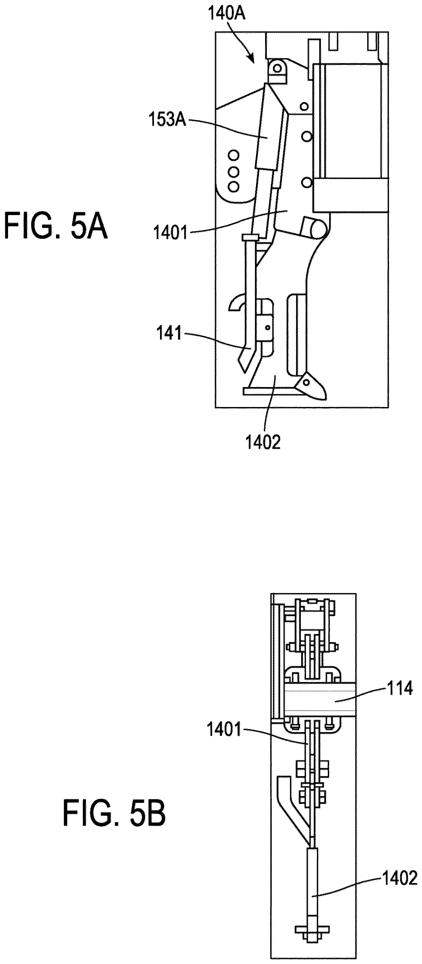

- les figures 5A et 5B illustrent respectivement une vue en perspective et une vue de face d'une dent du dispositif d'introduction illustré sur les figures 2 à 3B,
- les figures 6A et 6B illustrent respectivement une vue en perspective d'un dispositif d'introduction selon les figures 2 à 3B présentant deux extensions d'introduction repliées et une vue de dessus de ce même dispositif d'introduction dans lequel ces deux extensions d'introduction sont déployées, le groupe réservoir et système d'alimentation et leur support ayant été enlevé,
- la figure 6C illustre une vue en perspective un véhicule, ici un tracteur, équipé du dispositif d'introduction illustré sur les figures 6A et 6B.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

Les termes relatifs au sol et aux autres orientations du dispositif selon l'invention, tels que la profondeur de l'orifice d'amené de la composition, la hauteur de la structure porteuse vis-à-vis du sol, s'entendent dans une configuration d'utilisation du dispositif d'introduction et selon les définitions usuellement données à ces termes. Ainsi, le terme « hauteur » s'entend comme la distance entre ledit élément et le sol selon la direction verticale et le terme « profondeur » s'entend comme la distance entre ledit élément et l'affleurement du sol selon la direction verticale.

### Exposé détaillé de modes de réalisation particuliers

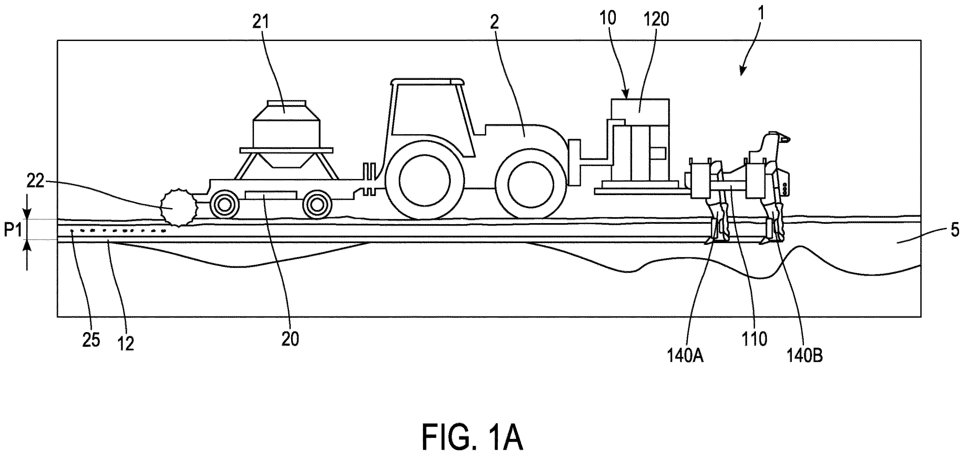

La figure 1A illustre un ensemble d'introduction 1 conjointe d'une composition 12 fertilisante hydro-rétentrice et de semences comprenant un dispositif d'introduction afin de permettre conjointement aux semis l'introduction de la composition 12 fertilisante hydro-rétentrice à une première profondeur P1.

Un tel ensemble d'introduction 1 comprend :
- un véhicule porteur 2, ici un tracteur agricole,
- un dispositif d'ensemencement 20 configuré pour introduire les semences 24 dans le sol à intervalle régulier au niveau d'une ligne de semis 25 ceci à une deuxième profondeur donnée P2,
- le dispositif d'introduction 10 afin de permettre l'introduction de la composition dans le sol à la première profondeur P1 donnée le long d'une ligne de fertilisation 11.

Le tracteur agricole 2 porte le dispositif d'ensemencement 20 et le dispositif d'introduction 10 de telle manière à permettre l'introduction conjointe des semences et de la composition 12 fertilisante hydro-rétentrice dans le sol. Dans la présente configuration, le dispositif d'ensemencement 20, est agencé à l'avant du tracteur agricole tandis que le dispositif d'introduction 10 est agencé à l'arrière du véhicule. Bien entendu, cette configuration peut être inversée sans que l'on sorte du cadre de l'invention. De même, en variante, le dispositif d'ensemencement 20 et le dispositif d'introduction 10 peuvent être agencé d'un même côté du tracteur agricole et étant agencé l'un derrière l'autre, ceci sans que l'on sorte du cadre de l'invention.

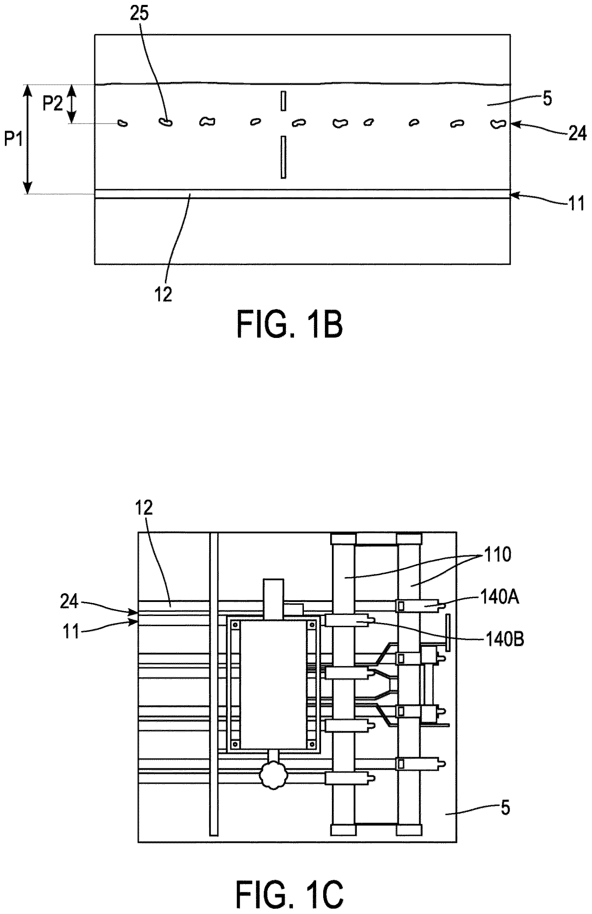

Selon l'exemple illustré sur les figures 1A et 1B, le dispositif d'ensemencement 20 est un système de plantation de pommes de terre connu sous la dénomination de planteuse à pommes de terre 25. Bien entendu, le dispositif d'ensemencement 20 peut être autre et ainsi être adapté pour permettre la plantation d'autre types de semences, tels que des grains de blé ou de maïs ou encore de légumineuses, sans que l'on sorte du cadre de l'invention. Un tel dispositif d'ensemencements 20 comprend un réservoir 21 et mécanisme semoir de pommes de terre 20 incluant notamment à roues planteuse.

Conformément à l'invention, un tel ensemble d'introduction 1 permet l'introduction conjointe des semences et de la composition 12 fertilisante hydro-rétentrice à des profondeurs et à des emplacements distincts l'un de l'autre afin de permettre aux plantes qui seront issues de cet ensemencement de bénéficier pleinement de l'introduction de la composition 12 fertilisante hydro-rétentrice. Ainsi dans le présent exemple, comme montré sur la figure 1C, la composition 12 peut être introduite sous la forme de deux silons encadrant le sillon d'ensemencement des pommes de terre.

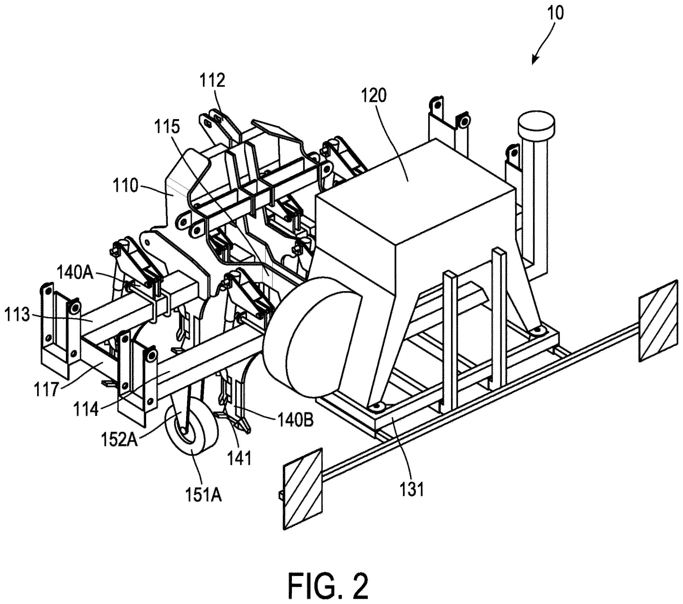

Le dispositif d'introduction 10 selon l'invention, comme montré sur les figures 2 à 3B comprend :
- une structure porteuse 110,
- un réservoir 120 destiné à contenir la composition 12 et agencé sur la structure porteuse 110,
- un système d'alimentation 130 en composition adapté pour générer un flux continu de composition 12,
- huit dents 140A, 140B montées sur la structure porteuse 110 et adaptées pour être au moins en partie enfoncée dans le sol 5, chaque dent 140A, 140B comprenant un orifice d'amené 141 de la composition 12 dans le sol 5 respectif aménagé à proximité d'une extrémité distale de ladite dent 140A, 140B, chaque orifice d'amené 141 étant relié au système d'alimentation 130 afin d'être alimenté en composition 12 par le flux continu de composition 12,
- un mécanisme d'enfoncement 151A, 151B, 153A, 153B de chaque dent 140A, 140B conformé pour maintenir enfoncé dans le sol 5 au moins en partie ladite dent 140A, 140B avec une profondeur d'enfoncement de l'orifice d'amené 141 correspondant à la première profondeur donnée P1.

La structure porteuse 110 comprend :
- un mécanisme d'attache 112 de la structure porteuse 110 au tracteur agricole 2,
- une première et deuxième traverse 113, 114 parallèles l'une à l'autre et reliées au mécanisme d'attache,
- quatre espaceurs maintenant les deux traverses 115, 116, 117, 118 parallèles l'une à l'autre, deux centraux 115, 116 et deux extrémaux 117, 118, le réservoir 120 et le système d'alimentation étant montés sur les espaceurs centraux 115,116.

Le mécanisme d'attache présente une configuration usuelle pour permettre le dispositif d'introduction 10 d'équiper le tracteur agricole 2. Dans le présent cas, il comprend deux oeillets 112 apte à coopérer avec un mécanisme d'attache complémentaire du tracteur agricole 2. Bien entendu, à partir de ses connaissance générale, l'homme du métier est à même de modifier le mécanisme d'attache 112 du dispositif d'introduction 10 afin de le faire correspondre au mécanisme d'attache du tracteur 2 à équiper. Le mécanisme d'attache est relié aux première et deuxième traverses 113, 114 au niveau de la première traverse 113 qui lui est proximale et est relié à la deuxième traverse 114 qui lui est distale au moyen de la première traverse 113 et des quatre espaceurs 115, 116, 117, 118.

Les deux traverses 113, 114 sont agencées de telles manière à être, en utilisation du dispositif d'introduction 10, horizontales, c'est-à-dire parallèle au sol, et transversale à une direction de déplacement du tracteur agricole 2. En fonction des besoins, chacune des traverses 113, 114, peut présenter une longueur comprise entre 1 m et 6 m et peuvent comprendre, comme cela est discuté dans la suite de ce document, des rajouts afin de fournir une largeur d'introduction de composition 12 plus importante et ainsi augmenter la surface de champ traité à chaque passage du dispositif d'introduction.

Bien entendu, si dans le présent mode de réalisation, le dispositif d'introduction 10 comprend deux traverses 113, 114, il est bien entendu envisageable, ceci sans que l'on sorte du cadre de l'invention, qu'un dispositif d'introduction 10 selon l'invention comprenne une seule traverse ou plus de deux.

Les première et deuxième traverse 113, 114 portent les huit dents 140A, 140B au moyen du mécanisme d'enfoncement 151A, 151B, 153A, 153B et d'un système d'attache.

Quatre dents 140A, 140B, sont réparties le long de la première traverse 113, et quatre autre dents 140A, 140B sont réparties le long de la deuxième traverse. Chacune des dents 140A, 140B sont agencées le long de la traverse correspondante 113, 114 avec une possibilité de réglage en position. Pour se faire, chacune des dents 140A, 140B est montée sur la traverse 113, 114 correspondante au moyen d'un collier de serrage 142A, 142B de telle manière à présenter une position fixe lorsque le collier de serrage 142A, 142B est serré et un agencement libre en translation le long de ladite traverse 113, 114 lorsque le collier de serrage 142A, 142B est desserré.

On notera que dans l'exemple de configuration illustrée sur la figure 1C, les dents 140A, 140B sont agencées en paire correspondant à un sillon d'ensemencement donné, une dent 140A de la première traverse 113 et une dent de la deuxième traverse 114.

Le mécanisme d'enfoncement 151A, 151B, 153A, 153B comprend :
- deux roues 151A, 151B destinées à être en contact du sol 5,
- un premier sous mécanisme de réglage de hauteur 152A, 152B pour régler la hauteur de la structure porteuse 110 vis-à-vis des roues 151A, 151B
- des deuxièmes sous-mécanismes de réglage de hauteur 153A, 153B pour régler la hauteur de chaque dent 140A, 140B, et donc la profondeur d'enfoncement de l'orifice d'amené 141, vis-à-vis de la structure porteuse 110.

Afin de permettre un premier réglage d'enfoncement, chacune des roues 151A, 151B est montée sur la structure porteuse au moyen du premier sous-mécanisme de réglage de hauteur 152A, 152B qui comprend une coulisse, sensiblement perpendiculaire aux traverse 113, 113 (c'est-à-dire sensiblement verticale) présentant une pluralité de position de blocage. On notera que pour des raisons de simplification des dessins, seul un montant vertical respectif est montré pour illustrer les coulisses. Avec une telle coulisse, il est possible de définir la hauteur de la structure porteuse 110 et donc des traverses 113, 114 qu'elle comporte, vis-à-vis du sol 5 en réglant la hauteur respective des coulisses.

En complément, afin d'affiner la profondeur d'enfoncement dans le sol des orifices d'amené 14, les dents 10A, 140B présente une longueur réglable au moyen du deuxième sous-mécanismes de réglage de hauteur 153A, 153B correspondant.

Chaque deuxième sous-mécanisme de réglage de hauteur comporte, outre une partie proximale 1401 de la dent 140A, 140B sur laquelle est montée mobile en translation une partie distale 1402 de la dent 140A, 140B, un vérin 153A, 153B apte à déplacée ladite partie distale 1402 vis-à-vis de la partie proximale 1401. Pour ce faire, chaque vérin 153A, 153B présente son cylindre monté solidaire de la partie proximale 1401 et le piston monté solidaire de la partie distale 1402. Ainsi, par le déplacement du piston du vérin, il est possible de modifier la position de la partie distale de 1402 vis-à-vis de la partie proximale 1401 et donc de la structure porteuse. L'orifice d'amené 141 étant agencé sur la partie distale, une telle modification permet de modifier la première profondeur donnée P1 à laquelle est introduit la composition 12.

On note que si dans le présent mode de réalisation, il est prévu un premier et un deuxième sous-mécanismes de réglage de la hauteur, il est bien entendu envisageable, sans que l'on sorte du cadre de l'invention, que le mécanisme d'enfoncement 151A, 151B, 153A, 153B n'en comporte qu'un seul parmi le premier et le deuxième sous-mécanisme de réglage de la hauteur.

Comme décrit ci-dessus, chaque dent 140A, 140B, comprend :
- la partie proximale 1401 par laquelle elle est montée sur la traverse 113, 114 correspondante,
- la partie distale 1402 montée déplaçable en translation vis-à-vis de la partie proximale 1401,
- le vérin 153A, 153B permettant le réglage de la position de la partie distale 1402 vis-à-vis de la partie proximale 1401,
- l'orifice d'amené 140 monté sur la partie distale.

Dans cette configuration la partie distale 1402 est monté sur la traverse correspondante 113, 114 au moyen du vérin 153A, 153B et de la partie proximale 1401. De cette manière, la partie distale 1402 comprenant l'orifice d'amené 141 est notamment relié à la structure porteuse 110 au moyen du vérin 153A, 153B, et donc du mécanisme d'enfoncement 151A, 151B, 153A, 153B.

La dent 140A, 140B s'étend longitudinalement avec une forme relativement plane en présentant deux arrêtes longitudinale orientées sensiblement à l'horizontal et selon une direction perpendiculaire aux première et deuxième traverses 113, 114, de manière à limiter la surface s'opposant au mouvement du dispositif d'introduction 10 lors de son déplacement. Plus spécifiquement, l'arrête destinée à être orientée vers l'avant du dispositif d'introduction selon la direction de déplacement du dispositif d'introduction 10. La partie distale comprend à son extrémité distale deux ailettes de guidage et une pointe d'enfoncement afin de favoriser son enfoncement dans le sol 5.

L'orifice d'amené 140 de chaque dent est relié par un système de conduites, non montré, au système d'alimentation 130 afin d'être alimenter en composition 12 par le flux continu de composition 12.

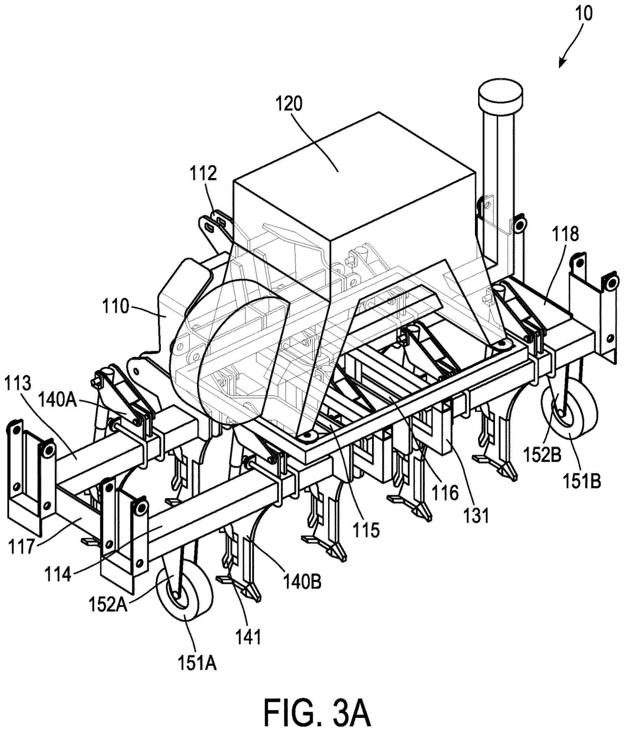

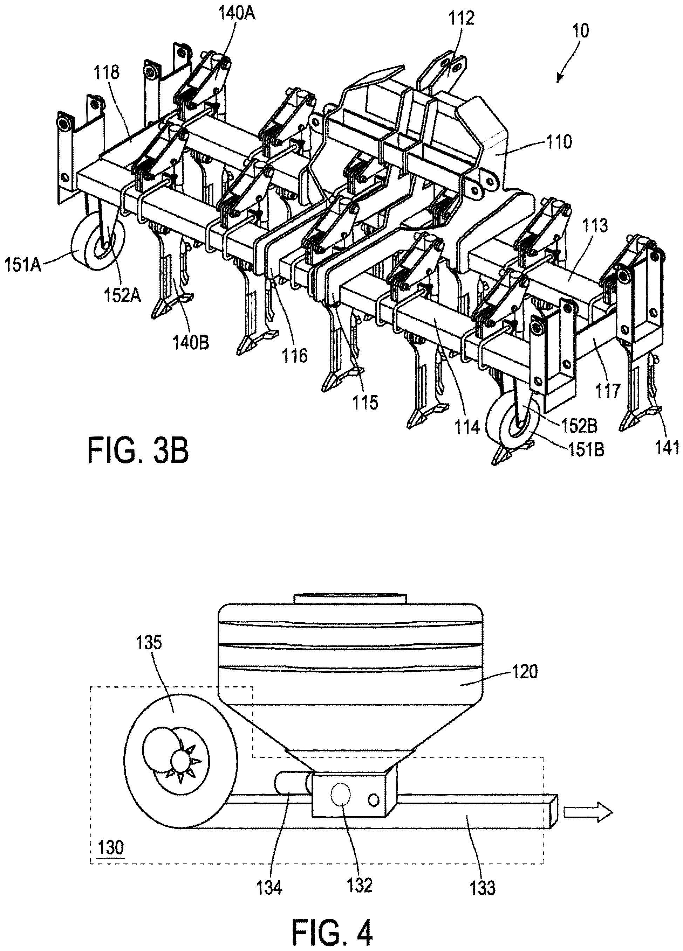

Comme montré sur la figure 4, illustrant schématiquement le réservoir 120 et le système d'alimentation 130, le système d'alimentation 130 comprend :
- Un élément support mobile 131 monté coulissant sur les espaceurs centraux 115,116 et supportant le reste du système d'alimentation 130 et le réservoir 120, de telle manière à ce que le dispositif d'introduction 10 présente une configuration repliée dans laquelle le système d'alimentation se trouve au-dessus des première et deuxième traverse 113, 114, montrée sur la figure 3A et une configuration déployée, correspondant à la configuration de fonctionnement et montré sur la figure 2, dans laquelle le système d'alimentation est décalé vis-à-vis des traverse 113, 114,
- au moins un rouleau canelé 132 agencé à une sortie du réservoir 120 et agencé pour prélever une quantité de composition 12 dans le réservoir 120 relative à une vitesse de rotation dudit rouleau canelé 132 et délivrer ladite quantité de composition dans une conduite d'amené 133,
- un moteur 134 agencé pour entraîner en rotation le rouleau canelé 132 afin de contrôler le débit en composition prélevé par le rouleau canelé 132,
- un ventilateur 135 apte à gérer un flux de gaz pressurisé et agencé en communication fluidique avec la conduite d'amené 133 de telle manière que le flux de gaz pressurisé est délivré à la conduite d'amené 133,
- la conduite d'amené 133 de la composition reliés au système de conduites de manière d'alimenter en composition chacun des orifices d'amené 141.

Si sur la figure 4, il n'est prévu un seul rouleau cannelé 132, dans une configuration avantageuse de l'invention, non reproduite, le système d'alimentation 130 peut comprendre deux rouleaux cannelés présentant des cannelures différentes, ceci de manière à ce que les deux rouleaux prélèvent, pour une même vitesse de rotation, des quantités de composition différente. Dans cette conformation, les rouleaux peuvent être entraînés en rotation indépendamment l'un de l'autre par le moteur 134. Ainsi, l'un des rouleaux cannelés étant dédié à un débit important de composition, alors que l'autre rouleau cannelé est dédié à un débit plus faible de composition, il est possible de choisir le rouleau cannelé à actionner en fonction de la quantité de composition à introduire dans le sol 5. On notera que si le moteur 134 peut être agencé l'un ou l'autre des rouleaux cannelés, selon variante non illustrée, il peut être prévu deux moteurs chacun dédié à un rouleau cannelé respectif.

Avec la configuration du système d'alimentation 130 montré sur la figure 7, l'ensemble rouleau cannelé 132, 134, la composition peut être prélevée dans le réservoir 120 avec un débit précis. Ce flux de composition prélevé dans le réservoir, une fois délivré par le rouleau cannelé 132 dans la conduite d'amené 133, le flux de gaz pressurisé généré par le ventilateur 135 permet d'entraîner ladite composition sous la forme du flux continu de composition en direction du système de conduites afin que ce flux continu de composition soit introduit dans le sol au moyen des orifices d'amené 141.

Dans le cadre de la présente invention, le dispositif d'introduction 10 peut être configurer pour assurer une introduction dans le sol contrôlée en quantité de composition. Pour obtenir un tel contrôle, le dispositif d'introduction 10 peut comprendre en outre, selon une possibilité non illustrée, un système de détermination d'une vitesse de déplacement du dispositif d'introduction 10 ou du tracteur agricole 2 le portant. Le système d'alimentation 130 peut en outre être configuré pour modifier le flux continu de composition en fonction de la vitesse de déplacement du dispositif 10 ou du tracteur agricole 2. Selon cette possibilité, le système d'alimentation 130 peut être configuré :
- pour stopper le flux continu de composition lorsque la vitesse de déplacement du dispositif d'introduction 10 ou d'un véhicule porteur 2 passe sous une vitesse seuil, et/ou
- pour modifier la vitesse de rotation du rouleau cannelé 132 au moyen du moteur 134 afin d'adapté la quantité de composition dans le flux continu de composition.

Selon une première configuration de cette possibilité, le système de détermination de la vitesse de déplacement du dispositif d'introduction 10 ou du tracteur agricole 2 le portant peut être configuré pour communiquer avec un système de positionnement du tracteur agricole 2 afin d'obtenir une information relative au positionnement ou au déplacement du tracteur agricole 2. En variante, le système de détermination de la vitesse de déplacement du dispositif d'introduction 10 ou du tracteur agricole 2 peut être apte à déterminé la vitesse de déplacement du dispositif d'introduction soit par une communication avec un réseau d'antennes de localisation, par exemple un réseau d'antennes équipant des satellites, soit par un système de capteurs de vitesse ou de variation de vitesse, tels que des accéléromètres.

Le rouleau cannelé 132 forme un rouleau de prélèvement 132 et est agencé pour prélever une quantité de composition dans le réservoir 120 relative à une vitesse de rotation du rouleau cannelé 132.

Le ventilateur 135 forme une source de gaz pressurisé apte à gérer un flux de gaz pressurisé. Bien entendu, en variante, une autre source de gaz peut être employé, tel qu'une turbine ou une conduite de gaz pressurisé reliée à une source de gaz pressurisé du tracteur agricole 2.

Avec une telle configuration, le dispositif d'introduction permet d'introduire la composition fertilisante hydro-rétentrice dans le sol 5.

La composition 12 fertilisante hydro-rétentrice comprend :
- un hydrogel comprenant un copolymère de polyacrylate et d'acrylamides de potassium ; et
- au moins un engrais azoté pur.

Les inventeurs ont découvert de manière surprenante la compatibilité exclusive de cet hydrogel avec les engrais azotés purs. Les résultats ont montré que cette combinaison spécifique, présentée par la présente composition 12, permet une synergie qui favorise une absorption optimale de l'azote par les plantes, réduisant ainsi le gaspillage d'engrais et les impacts environnementaux associés (voir exemples).

La composition 12 peut comprendre entre 60 et 95%, de préférence entre 70 et 95%, plus préférentiellement entre 80 et 95% en poids d'un hydrogel comprenant un copolymère de polyacrylate et d'acrylamides de potassium ; et entre 5 et 40%, de préférence entre 5 et 20%, plus préférentiellement entre 5 et 10% en poids d'au moins un engrais azoté pur.

Le au moins un engrais azoté pur peut être sélectionné dans le groupe comprenant l'urée, le sulfate d'ammonium, Nitrate d'ammonium, Nitrate de sodium, Ammoniac anhydre, Nitrate d'urée, Urée formaldéhyde, Ammoniac liquide (solution d'ammoniac dans l'eau), Anhydride ammoniacal, ou un mélange de ceux-ci.

La composition 12 peut comprendre moins de 1% en poids d'engrais phosphatés et/ou d'engrais potassiques, de préférence ne comprend pas d'engrais phosphatés et/ou d'engrais potassiques. Ce mode de réalisation permet d'éviter les incompatibilités observées entre l'hydrogel et les engrais phosphatés ou potassiques.

L'hydrogel et/ou l'engrais azoté peut être présenté sous forme de granulés, facilitant ainsi son application dans le sol. Les granulés peuvent être dimensionnés entre 0,5 et 5 mm, de préférence entre 0,5 et 3 mm, plus préférentiellement entre 0,8 et 2 mm pour assurer une distribution homogène dans le sol et une absorption efficace par les racines des plantes.

La composition 12 selon l'invention peut être caractérisée en ce que l'hydrogel est fonctionnalisé avec des polymères biodégradables pour une libération contrôlée dans le sol. L'incorporation de polymères biodégradables dans l'hydrogel vise à assurer une libération contrôlée de la composition, avec une dégradation ultérieure respectueuse de l'environnement.

Les polymères biodégradables peuvent être sélectionnés dans la liste comprenant des polyesters, des polyuréthanes, des polysaccharides, le polycaprolactone, le polylactate, le polyhydroxyalcanoate, l'amidon thermoplastique, la cellulose, le polybutylène succinate, le polycaprolactam, le polyacide polylactique, le polyéthylène oxo-biodégradable, les copolymères à base de maïs, les copolymères d'acide polylactique, les copolymères de polyhydroxybutyrate, les copolymères de polyhydroxyvalerate, et leurs mélanges.

Avec le dispositif selon l'invention, l'introduction de la composition 12 dans le sol peut être réalisé au moyen d'un procédé comprenant les étapes suivantes :
- enfoncement et maintien enfoncé au moins en partie dans le sol d'au moins une dent, ladite dent comprenant un orifice d'amené de la composition dans le sol aménagé à proximité d'une extrémité distale de la dent, le maintien enfoncé étant réalisé de manière à ce qu'une profondeur d'enfoncement de l'orifice d'amené correspond à une première profondeur donnée,
- génération d'un flux continu de composition et alimentation du ou de chaque orifice d'amené avec par ledit flux continu de composition,
- déplacement de l'au moins une dent de manière à fournir l'introduction.

En outre et comme indiqué en introduction du présent exposé détaillé, selon une utilisation avantageuse du dispositif d'introduction selon l'invention le dispositif d'introduction peut faire partir d'un ensemble d'introduction 1 conjointe d'une composition fertilisante hydro-rétentrice et de semences 21 illustré schématiquement sur la figure 1. Dans le cadre d'un tel ensemble, le procédé peut en outre comprendre l'étape supplémentaire :
- Introduction à une deuxième profondeur donnée P2 de semences à intervalle régulier et en parallèle du déplacement de l'au moins une dent 140A, 140B de manière à fournir une ligne de semis parallèle à la ligne de fertilisation.

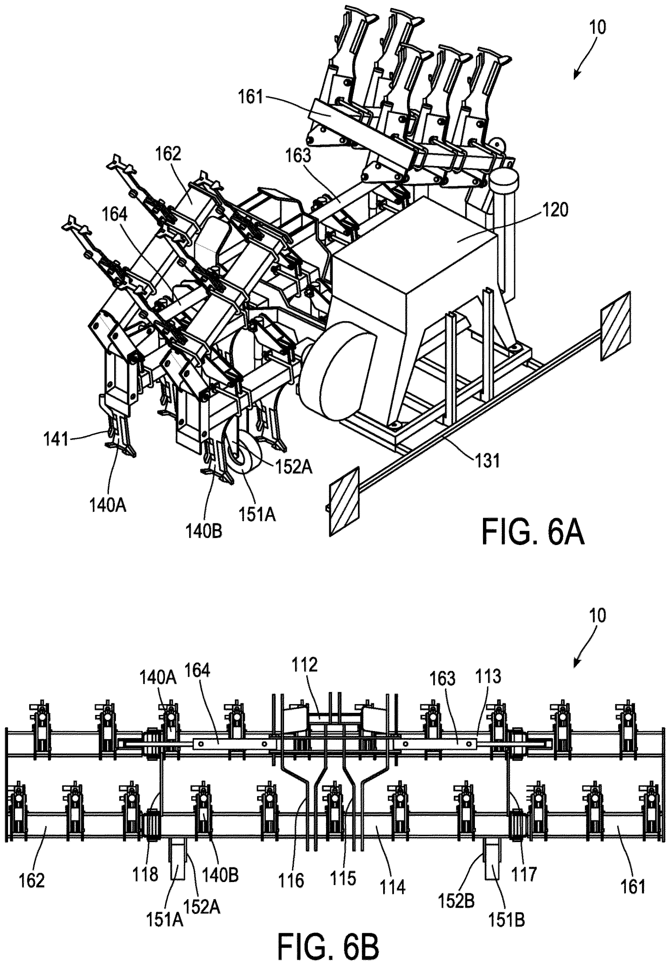

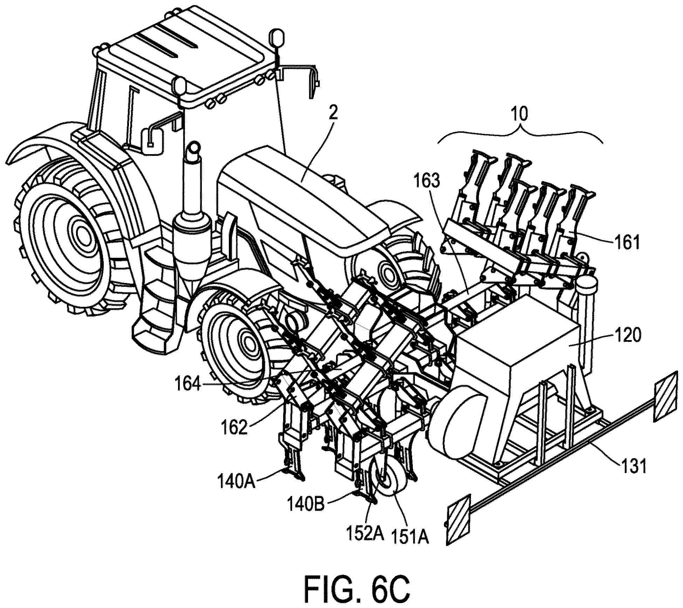

Les figures 6A à 6C illustrent un dispositif d'introduction 10 selon une variante du présent mode de réalisation, dans laquelle il est prévu deux rajouts latéraux 161, 162 prolongeant de part et d'autre la première et deuxième traverse 113, 114 et comportant des dents supplémentaires 140C, 140D. Un dispositif d'introduction 10 selon cette variante se différencie d'un dispositif d'introduction 10 selon le présent mode de réalisation en ce qu'il comporte deux rajouts latéraux 1 prolongeant de part et d'autre la première et deuxième traverse 113, 114

De tels rajouts latéraux 161, 162 sont montés pivotant sur les extrémités des première et deuxième traverse 113, 114 afin de présenter deux configurations :
- une configuration repliée dans laquelle les rajouts latéraux 161, 162, sont replié sur le dessus des traverses 113, 114, afin de limiter l'empreinte surfacique du dispositif d'introduction 10,
- une configuration déployée dans laquelle les rajouts latéraux 161, 162 sont agencés dans le prolongement des première et deuxième traverses de manière à offrir une extension de la surface du sol dans laquelle est introduite la composition.

Afin de permettre un passage de la configuration repliée vers la configuration déployée, le dispositif d'introduction peut comprendre deux vérins 163, 164 latéraux chacun agencé pour déplacer une extension latérale 161, 162 respectives de la configuration repliée vers la configuration déployée.

Chaque rajout latéral 161, 162 comprend deux extensions latérales correspondant respectivement à la première et la deuxième traverse 113, 114 sur lesquelles extensions latérales sont montés cinq dents supplémentaires 140C, 140D. Ainsi, en plus des onze dents 140A, 140B montés sur les première et deuxième traverses 113, 114, les deux extensions rajoutent dix dents 140C, 140D supplémentaires portant le nombre de dents 140A, 140B, 140C, 140D à vingt-une dents.

Les dents supplémentaires 140C, 140D présentent une configuration aux dents équipant les première et deuxième traverse 113, 114 et comporte chacune un orifice d'amené 141 relié au système d'alimentation 130 afin d'être alimenté en composition par le flux continu de composition.

De cette manière, les extensions latérales étant dans le prolongement des première et deuxième traverses, on assure avec les extensions latérales et pour mes dents supplémentaires 140C, 140D une introduction de composition 12 dans le sol avec les mêmes conditions que celles obtenues avec les dents 140A, 140B agencées le longs des première et deuxième traverses 113, 114.

## Revendications

1. Dispositif d'introduction (10) d'une composition fertilisante hydro-rétentrice dans le sol (5), ladite composition étant sous une forme granulaire ou gélifiée, comprenant :
- une structure porteuse (110),
- un réservoir (120) destiné à contenir la composition et agencé sur la structure porteuse (110),
- un système d'alimentation (130) en composition adapté pour générer un flux continu de composition,
- au moins une dent (140A, 140B) montée sur la structure porteuse (110) et adaptée pour être au moins en partie enfoncée dans le sol (5), ladite dent (140A, 140B) comprenant un orifice d'amené (141) de la composition dans le sol (5) aménagé à proximité d'une extrémité distale de la dent (140A, 140B), le ou chaque orifice d'amené (141) étant relié au système d'alimentation (130) afin d'être alimenté en composition par le flux continu de composition,
- un mécanisme d'enfoncement (151A, 151B, 153A, 153B) de l'au moins une dent (140A, 140B) conformé pour maintenir enfoncé dans le sol (5) au moins en partie l'au moins une dent (140A, 140B) avec une profondeur d'enfoncement de l'orifice d'amené (141) correspondant à une première profondeur donnée (P1).

2. Le dispositif d'introduction (10) selon la revendication 1 dans lequel le système d'alimentation (130) comprend une source de gaz (135) pressurisé apte à gérer un flux de gaz pressurisé et dans lequel le système d'alimentation (130) est configuré pour délivrer le flux de gaz pressurisé à une conduite d'amené (133) de composition de manière à fournir un entraînement de ladite composition sous la forme du flux continu de composition.

3. Le dispositif d'introduction (10) selon la revendication 2, dans lequel le système d'alimentation (130) comprend au moins une roue ou un rouleau de prélèvement (132) agencé pour prélever une quantité de composition dans le réservoir (120) relative à une vitesse de rotation de ladite roue ou rouleau de prélèvement (132) et délivrer ladite quantité de composition dans la conduite d'amené (133), le dispositif d'introduction (10) comprenant en outre un moteur (134) apte à entraîner en rotation la roue ou le rouleau de prélèvement (132) à une vitesse variable de manière à faire varier le débit en composition du flux continu de composition.

4. Dispositif d'introduction (10) selon l'une quelconque des revendications 1 à 3, dans lequel le mécanisme d'enfoncement (151A, 151B, 153A, 153B) comprend au moins une roue (151A, 151B) destinée à venir en contact du sol et au moins un sous mécanisme de réglage (152A, 152B) de la hauteur de la structure porteuse (110) vis-à-vis de ladite roue (151A, 151B) ou de l'au moins dent (140A, 140B) vis-à-vis de la structure porteuse (110) de manière à assurer que le ou chaque orifice d'amené (141) soit maintenu enfoncé à la première profondeur donnée (P1).

5. Dispositif d'introduction selon l'une quelconque des revendications 1 à 4, dans lequel l'au moins une dent est montée déplaçable en translation le long de la structure porteuse de manière à permettre un réglage en position de ladite dent et donc d'une ligne de fertilisation correspondante le long de ladite structure porteuse.

6. Dispositif d'introduction selon l'une quelconque des revendications, comprenant en outre un système de détermination d'une vitesse de déplacement du dispositif d'introduction (10) ou d'un véhicule porteur (2) le portant, et dans lequel le système d'alimentation (130) est configuré pour modifier le flux continu de composition en fonction de la vitesse de déplacement du dispositif (10) ou du véhicule porteur (2), ledit système d'alimentation étant préférentiellement configuré pour stopper le flux continu de composition lorsque la vitesse de déplacement du dispositif d'introduction (10) ou d'un véhicule porteur (2) passe sous une vitesse seuil.

7. Dispositif d'introduction selon la revendication 6, dans lequel le système de détermination d'une vitesse de déplacement est configuré pour communiquer avec un système de positionnement du véhicule porteur (2) afin d'obtenir une information relative au positionnement ou au déplacement dudit véhicule porteur (2).

8. Ensemble d'introduction (1) conjointe d'une composition fertilisante hydro-rétentrice et de semences (21) comprenant :
- un véhicule porteur (2),
- un dispositif d'ensemencement (20) configuré pour introduire les semences (21) dans le sol à intervalle régulier au niveau d'une ligne de semis (22) ceci à une deuxième profondeur donnée (P2),
- un dispositif d'introduction (10) selon l'une quelconque des revendication 1 à 7 afin de permettre l'introduction de la composition dans le sol à la première profondeur (P1) donnée le long d'une ligne de fertilisation (11),
le véhicule porteur (2) portant le dispositif d'ensemencement (20) et le dispositif d'ensemencement (10) de telle manière à permettre l'introduction des semences (21) et de la composition dans le sol.

9. Procédé d'introduction d'une composition fertilisante hydro-rétentrice, ladite composition étant sous une forme granulaire ou gélifiée, le procédé d'introduction comprenant l'étape suivante :
- enfoncement et maintien enfoncé au moins en partie dans le sol d'au moins une dent, ladite dent comprenant un orifice d'amené de la composition dans le sol aménagé à proximité d'une extrémité distale de la dent, le maintien enfoncé étant réalisé de manière à ce qu'une profondeur d'enfoncement de l'orifice d'amené correspond à une première profondeur donnée,
- génération d'un flux continu de composition et alimentation du ou de chaque orifice d'amené avec par ledit flux continu de composition,
- déplacement de l'au moins une dent de manière à fournir l'introduction de la composition à la première profondeur donnée le long d'une ligne de fertilisation.

10. Procédé d'introduction selon la revendication 9, dans lequel la composition fertilisante hydro-rétentrice comprend :
- un hydrogel comprenant un copolymère de polyacrylate et d'acrylamides de potassium ; et
- au moins un engrais azoté pur.

11. Procédé d'introduction selon la revendication 9 ou 10, dans lequel il est prévu en outre une étape supplémentaire :
- Introduction à une deuxième profondeur donnée (P2) de semences à intervalle régulier et en parallèle du déplacement de l'au moins une dent (140A, 140B) de manière à fournir une ligne de semis parallèle à la ligne de fertilisation.
